# FASCICULE DE BREVET EUROPEEN

(11) **EP 2 966 941 B1**
(45) Date de publication et mention de la délivrance du brevet: **06.03.2019**
(21) Numéro de dépôt: 15175959.4
(22) Date de dépôt: 08.07.2015
(51) Int. Cl.: H05B 33/08, H02H 5/04, F21V 29/00

(54) **SYSTÈME DE PILOTAGE DE L'ALIMENTATION ÉLECTRIQUE ET DE GESTION THERMIQUE DE SOURCES LUMINEUSES**
SYSTEM ZUR STEUERUNG DER STROMVERSORGUNG UND DER WÄRMEKONTROLLE VON LEUCHTQUELLEN
SYSTEM FOR CONTROLLING THE POWER SUPPLY AND THERMAL MANAGEMENT OF LIGHT SOURCES

(30) Priorité: 11.07.2014 FR 1456731
(43) Date de publication de la demande: 13.01.2016
(73) Titulaire: VALEO VISION, 93012 Bobigny Cedex (FR)
(72) Inventeur: WACHEUX, Patrick, 27220 Bois Le Roy (FR)

(56) Documents cités:
- EP-A1- 2 651 186
- US-A1- 2011 068 701
- US-A1- 2012 262 074

## Description

L'invention a trait au domaine de l'alimentation électrique de sources lumineuses. En particulier, l'invention se rapporte à un système et procédé de pilotage de l'alimentation électrique et de gestion thermique de sources lumineuses, plus précisément de diodes électroluminescentes, LED. L'invention concerne également un dispositif lumineux pour un véhicule automobile.

Une diode électroluminescente, LED, est un composant électronique capable d'émettre de la lumière lorsqu'il est parcouru par un courant électrique. L'intensité lumineuse émise par une LED est en général dépendante de l'intensité du courant électrique qui la traverse. Entre autres, une LED est caractérisée par une valeur seuil d'intensité de courant. Ce courant direct (« forward current ») maximal est en général décroissant à température croissante. De même, lorsqu'une LED émet de la lumière, on observe à ses bornes une chute de tension égale à sa tension directe (« forward voltage »), qui est en général également décroissante à température croissante. Dans le domaine automobile, on a de plus en plus recours à la technologie LED pour diverses solutions de signalisation lumineuse. Les LEDs sont utilisées afin d'assurer des fonctions lumineuses telles que les feux diurnes, les feux de signalisation etc... Tandis qu'elles sont exposées à des températures de fonctionnement importantes, lors de la mise en route d'un véhicule automobile, elles opèrent à la température ambiante du véhicule. Cette température peut notamment atteindre des températures négatives.

Il est connu dans l'art d'utiliser un circuit de pilotage pour piloter l'alimentation d'un ensemble ou groupe de LEDs. Le circuit définit la tension appliquée à une branche montée en charge et comprenant le groupe de LEDs branchées en série. Dans le domaine des dispositifs lumineux pour véhicules automobiles, il est particulièrement important de pouvoir assurer une luminosité constante afin de garantir la sécurité des utilisateurs du véhicule et des acteurs du trafic routier. Afin de fournir une alimentation constante, des circuits de pilotage connus utilisent différents types de convertisseurs DC/DC pour convertir la tension continue fournie par exemple par une batterie de voiture en une tension continue de charge, dépendante du nombre de LEDs alimentées. La tension directe des LEDs est plus importante à basse température qu'à température ambiante de 25°C ou qu'à la température de fonctionnement des LEDs. En général, un convertisseur DC/DC est cependant dimensionné selon les caractéristiques des LEDs qu'il alimente à température de fonctionnement. Il peut donc arriver que le convertisseur ne soit pas capable de fournir un niveau de tension électrique assez élevé pour alimenter les LEDs montées en charge, lorsque celles-ci ont été refroidies. Ce défaut peut se limiter à quelques Volts.

Il est connu d'aborder ce problème en divisant l'ensemble des LEDs alimentées par le convertisseur DC/DC en plusieurs branches indépendantes, chaque branche comprenant une source de courant dédiée. Cette solution est préconisée si un nombre important de LEDs est alimenté, et qu'une seule branche mettant en série l'intégralité des LEDs mènerait à une tension directe globale nettement supérieure à la tension maximale que le convertisseur peut fournir. Cette solution n'est cependant pas adaptée lorsque la tension directe globale ne dépasse que légèrement à de basses températures la tension maximale que le convertisseur peut fournir. En effet la solution consomme beaucoup de place sur un circuit imprimé et utilise beaucoup de composants électriques additionnels - au moins une source de courant par branche.

Une autre alternative connue est de partager l'alimentation de plusieurs branches indépendante de LEDs dans le temps. Dans ce cas de « time sharing », le convertisseur DC/DC alimente chacune des branches de façon alternante. Cette solution est faisable lorsqu'un nombre important de LEDs est alimenté, et qu'une seule branche mettant en série l'intégralité des LEDs mènerait à une tension directe globale nettement supérieure à la tension maximale que le convertisseur peut fournir. Cependant, cette solution est également trop lourde lorsque la tension directe globale ne dépasse que légèrement à de basses températures la tension maximale que le convertisseur peut fournir. En effet cette solution nécessite un dispositif d'alimentation plus complexe et onéreux afin de réaliser l'alimentation en alternance des branches de LEDs.

La demande de brevet US 20120262074 A1 divulgue un dispositif de pilotage d'alimentation électrique de DELs, montées en série, dont au moins une des DELs est branchée à un circuit commandé par une mesure de température, le circuit étant apte à court-circuiter la dite DEL branchée au circuit, afin de stabiliser/compenser la variation totale de la tension dans la chaîne des DELs.

L'invention a pour objectif de proposer un système de pilotage de l'alimentation électrique de sources lumineuses palliant au moins un des inconvénients de l'art antérieur. L'invention à également pour objectif de proposer un procédé de pilotage de l'alimentation électrique de sources lumineuses ainsi qu'un dispositif pour un véhicule automobile utilisant le système de pilotage selon l'invention.

L'invention a pour objet un dispositif de pilotage d'alimentation électrique de sources lumineuses. Le dispositif comprend :
- un convertisseur DC/DC capable de convertir une tension électrique d'entrée en une tension électrique de sortie, et
- un circuit monté en charge du convertisseur, comprenant une pluralité de sources lumineuses montées en série.

Le dispositif est remarquable en ce qu'il comprend en outre au moins un circuit d'interruption comprenant des moyens d'interruption. Les moyens d'interruption sont destinés à court-circuiter au moins une des sources lumineuses en fonction d'une mesure de la température obtenue par des moyens de mesure de la température ambiante.

Par exemple, le circuit peut comporter un moyen d'interruption apte à court-circuiter une des sources lumineuses. En variante, le circuit par exemple comporte un moyen d'interruption apte à court-circuiter plusieurs sources lumineuses. En variante encore, le circuit par exemple comporte plusieurs moyens d'interruption, chacun apte à court-circuiter une ou plusieurs sources lumineuses.

De préférence, toutes les sources lumineuses du circuit monté en charge du convertisseur sont montées en série.

Le convertisseur peut de préférence comprendre un circuit de type boost, apte à élever la tension, et/ou un circuit de type buck, apte à abaisser la tension. Alternativement le convertisseur peut comprendre un circuit de type flyback ou encore de type sepic.

Le circuit d'interruption est de préférence branché aux bornes d'une source lumineuse ou aux bornes d'un ensemble de sources lumineuses branchées séquentiellement en série.

Plusieurs circuits d'interruptions peuvent alternativement être branchés aux bornes de plusieurs sources lumineuses ou aux bornes de plusieurs ensembles contigus de sources lumineuses.

De préférence, les sources lumineuses peuvent être des diodes électroluminescentes, LED, qui sont caractérisées entre autre par leur chute de tension, ou tension directe, VF.

Le circuit d'interruption peut préférentiellement être apte à court-circuiter au moins une des sources lumineuses uniquement lorsque ladite mesure de la température est inférieure à une température seuil.

Le circuit d'interruption peut préférentiellement être apte à désactiver le court-circuit d'au moins une des sources lumineuses uniquement lorsque ladite mesure de la température est supérieure à une température seuil. La température seuil peut de préférence être identique à la température seuil en-dessous de laquelle le court-circuit est réalisé par le circuit d'interruption.

Avantageusement, la pluralité de LEDs peut comprendre un nombre N de LEDs, et le ou les circuits d'interruption sont aptes à court-circuiter un nombre M<N de LEDs. En plus, à température ambiante inférieure à ladite température seuil, la chute globale de tension N*VF est de préférence supérieure à la tension électrique maximale VMAX que le convertisseur est capable de fournir au circuit de charge, tandis que la chute de tension lors d'un court-circuit, (N-M)*VF, est inférieure ou égale à VMAX.

La température seuil est de préférence inférieure à -10 °C ou alternativement égale à -15°C. Elle peut encore plus préférentiellement être inférieure à -15 °C.

De préférence, le circuit d'interruption peut comprendre un circuit électrique comprenant un thermisteur, le circuit étant apte à fournir deux niveaux de tension électrique, les deux niveaux étant sensiblement égaux lorsque la température ambiante est supérieure à ladite valeur seuil, et les deux niveaux étant distincts lorsque la température ambiante est inférieure à ladite température seuil.

Le circuit peut en outre comprendre un élément comparateur agencé de façon à comparer les deux niveaux de tension fournis, et à commander l'état d'un élément interrupteur apte à court-circuiter l'au moins une source lumineuse en fonction du résultat de la comparaison.

Avantageusement, l'élément interrupteur est fermé, ce qui donne lieu au court-circuitage des LEDs aux bornes desquelles il est branché, lorsque les deux niveaux de tension sont distincts, et donc lorsque la température ambiante est inférieure à la température seuil. L'élément interrupteur est ouvert lorsque les deux niveaux de tension sont sensiblement égaux, et donc lorsque la température ambiante est supérieure à la température seuil.

L'élément comparateur est de préférence couplé à l'élément interrupteur à travers un miroir de courant. Alternativement, l'élément comparateur peut être couplé directement en série à l'élément interrupteur. De préférence, l'élément comparateur peut être couplé à plusieurs éléments interrupteurs aptes à court-circuiter plusieurs LEDs ou plusieurs ensembles de LEDs.

Le circuit électrique et l'élément comparateur peuvent de préférence être alimentés par la tension directe d'au moins l'une des sources lumineuses, VF, et préférentiellement d'au moins deux des sources lumineuses, 2*VF. Cette caractéristique permet d'éviter d'être gêné par les variations de VF

L'invention a également pour objet un dispositif lumineux pour un véhicule automobile comprenant au moins un dispositif de pilotage de l'alimentation électrique de sources lumineuses, assurant notamment une fonction de signalisation lumineuse du véhicule automobile. Le dispositif lumineux est remarquable en ce que le dispositif de pilotage est conforme à l'invention.

L'invention a également pour objet un procédé de pilotage de l'alimentation électrique de sources lumineuses. Le procédé comprend les étapes suivantes:
- mise à disposition d'un convertisseur DC/DC capable de convertir une tension électrique d'entrée en une tension électrique de sortie;
- mise à disposition d'un circuit monté en charge du convertisseur comprenant une pluralité de sources lumineuses montées en série ;
- court-circuitage sélectif d'au moins une des sources lumineuses par au moins un circuit d'interruption en fonction d'une mesure de la température obtenue par des moyens de mesure de la température ambiante.

Grâce à l'invention, il devient possible d'utiliser un convertisseur DC/DC connu pour alimenter un ensemble de sources lumineuses, telles que des LEDs, temporairement à des températures très basses et nettement en dessous de la température de fonctionnement des LEDs. A de telles températures, notamment négatives, les LEDs nécessitent une tension directe plus importante qu'à leur température de fonctionnement, alors que le convertisseur a été dimensionné pour les alimenter à la température de fonctionnement. Selon l'invention, une ou plusieurs LEDs sont temporairement court-circuitées de façon automatique lorsqu'une température basse est détectée. Le gain en tension de charge ainsi réalisé est suffisant pour permettre au convertisseur d'alimenter la majorité des LEDs, qui n'est pas court-circuitée. L'alimentation des LEDs non court-circuitées permet, par leur échauffement, de rapidement élever la température du circuit imprimé qui abrite l'ensemble des LEDs à une température à laquelle le convertisseur est capable d'alimenter l'ensemble des LEDs. En conséquence, le court-circuit est automatiquement levé lorsque la température s'élève.

Comme le niveau de la tension directe des LEDs est utilisé comme référence de tension commune des éléments utilisés par l'invention, le circuit d'interruption proposé est complètement autonome et ne nécessite pas d'alimentation supplémentaire. En particulier, le circuit ne nécessite pas de signaux de contrôle externes et s'active automatiquement lorsqu'un niveau de température bas, engendrant une demande en tension élevée, est détecté. Le circuit d'interruption peut être mis en oeuvre sur un circuit imprimé qui comprend des LEDs de façon complétement indépendant du circuit de pilotage de l'alimentation des LEDs.

L'invention a recours à des composants standards, durables et peu onéreux. Son implémentation est réalisable sur le circuit imprimé qui abrite les LEDs. L'ajout de l'invention à un dispositif de pilotage de l'alimentation de LEDs connu est donc réalisable sans pertes substantielles d'espace.

D'autres caractéristiques et avantages de la présente invention seront mieux compris à l'aide de la description et des dessins, qui ne sont présentés qu'à titre indicatif et non-limitatif de l'invention, et parmi lesquels :
- la figure 1 est une illustration schématique d'un mode de réalisation préférentiel du système selon l'invention ;
- la figure 2 est un diagramme de circuit illustrant un mode de réalisation préférentiel d'un détail du système selon l'invention.

Des références similaires sont utilisées pour décrire des concepts semblables à travers plusieurs modes de réalisations distincts. Par exemple, les références 100, 200 décrivent un dispositif de pilotage d'alimentation électrique de source lumineuse selon l'invention dans deux modes de réalisation distincts.

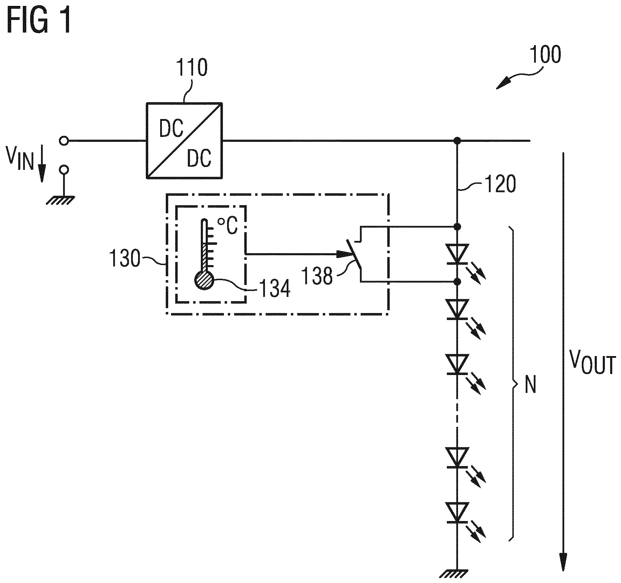

La figure 1 illustre de manière schématique un dispositif 100 de pilotage d'alimentation électrique selon une réalisation de l'invention. Le convertisseur 110, qui peut être un convertisseur de type buck ou boost, ou une combinaison de convertisseurs buck et boost, est capable de convertir une tension continue d'entrée, V_{IN}, fournie par une source non-illustrée, en une tension continue de sortie V_{OUT}. Dans d'autres modes de réalisation de l'invention, le convertisseur peut être conforme à une architecture alternative, de nombreuses variantes étant connues dans l'art, comme par exemple l'architecture flyback ou l'architecture SEPIC (« single-ended primary-indcutor converter ».Un circuit de charge 120, illustré à titre exemplaire par un branchement en série d'un nombre N de diodes électroluminescentes, LED, est alimenté à l'aide du convertisseur 110. Le circuit de charge 120 peut comprendre d'autres sources lumineuses au lieu des LEDs sans pour autant sortir du contexte de l'invention. Il est supposé afin de rendre la description plus claire que les LEDs sont caractérisées par une tension directe (« forward voltage ») VF commune. Le branchement en série de N LEDs induit donc une chute de tension de N*VF Volts aux extrémités de la branche de charge 120.

Selon l'invention, le dispositif comprend en outre au moins un circuit d'interruption 130, qui est apte à court-circuiter au moins une des sources lumineuses ou LEDs du circuit de charge 120. Dans l'exemple illustré, une LED unique peut être court-circuitée par le circuit 130 puisque ce dernier est branché directement aux bornes d'une LED. Le même circuit 130 peut cependant être branché aux extrémités d'une série de LEDs de la branche de charge. Alternativement, plusieurs circuits d'interruption 130 équivalents peuvent être agencés aux bornes de plusieurs LEDs de la branche de charge 120, ou aux extrémités de plusieurs séries de LEDs de la branche de charge. Le circuit d'interruption comprend des moyens d'interruption 138 et des moyens de mesure de la température ambiante 134 disposés de façon à commander l'état des moyens d'interruption 138. L'ouverture et la fermeture des moyens d'interruption est réalisée en fonction de la température mesurée par les moyens de mesure 134. En particulier, l'interrupteur est ouvert lorsque la température est supérieure à une température seuil. Dans ce cas, aucune LED n'est court-circuitée et le convertisseur 110 alimente l'intégralité des N LEDs. Si par contre la température mesurée est inférieure à une température seuil, les moyens d'interruption 138 sont fermés, ce qui court-circuite le ou les LEDs auxquelles le circuit 130 s'applique. En considérant que le nombre de LEDs impliquées est égal à M<N, un court-circuit sur M LEDS implique que le convertisseur n'alimente plus que M-N LEDs de la branche.

La température seuil est de préférence choisie en fonction de la tension maximale VMAX que le convertisseur peut fournir, et en fonction de la tension directe globale N*VF de la branche de charge 120. Cette dernière grandeur dépend de la température et elle est plus importante à basse température qu'à température élevée. L'homme du métier saura adapter la température seuil lorsqu'il observe qu'à une température donnée, la tension requise N*VF devient légèrement supérieure à VMAX, tandis que la tension requise après court-circuitage de M LEDs, (N-M)*VF, est inférieure ou égale à VMAX. En réglant la température en accord avec cette observation, le montage selon l'invention permet d'assurer que le niveau de tension requis par la branche 120 ne dépasse pas la tension maximale VMAX que le convertisseur 110 est capable de fournir. En dessous de la température seuil, lorsque la tension requise est plus importante que VMAX, un nombre restreint mais suffisant M de LEDs est court-circuité par le circuit 130, ce qui réduit la tension requise de M*VF Volts à un niveau inférieur ou égal à VMAX. Les LEDs alimentées réchauffent rapidement le circuit imprimé sur lequel le montage est réalisé, ce qui augmente la température ambiante, et ce qui engendre une diminution de la tension requise par la branche 120. Dès que la température seuil est atteinte, le convertisseur 110 est apte à alimenter l'intégralité des N LEDs, et le court-circuit est levé automatiquement. Comme l'effet du court-circuit est de courte durée et n'implique qu'un nombre restreint de LEDs, la réduction temporaire de la luminosité émise par la branche 120 n'est en général pas perceptible à l'oeil humain.

Le dispositif de pilotage selon l'invention est particulièrement applicable à un dispositif lumineux pour un véhicule automobile. Le convertisseur 110 est alors alimenté par une source de courant interne au véhicule automobile, telle que la batterie du véhicule automobile. Les sources lumineuses alimentées par le biais du dispositif de pilotage assurent de préférence une fonction de signalisation lumineuse du véhicule automobile. Dans un tel cas d'application, la température seuil est avantageusement inférieure à -10 °C et préférentiellement inférieure à -15 °C.

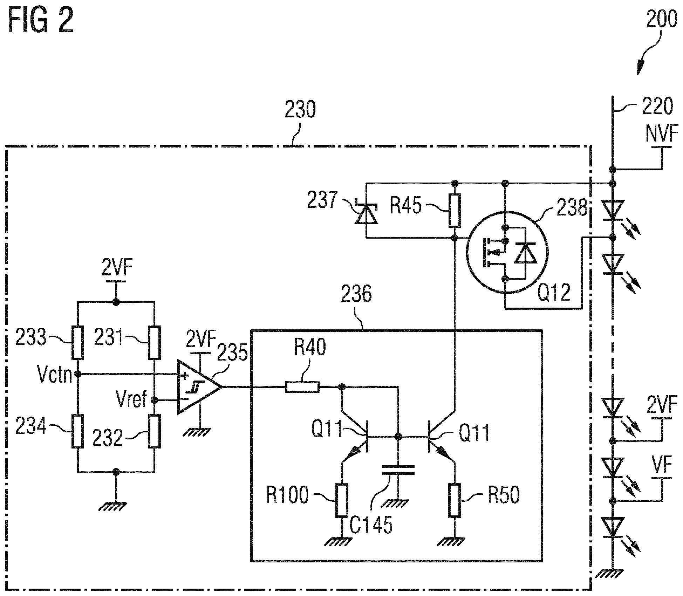

Ceci décrit de manière générale le fonctionnement du dispositif ainsi que les étapes principales du procédé selon l'invention. Une réalisation concrète est décrite dans ce qui et à l'aide de la figure 2, sans pour autant limiter la protection à l'exemple donné. Sur base des principes décrits et de l'exemple donné, l'homme du métier sera capable d'implémenter et/ou d'adapter l'invention selon les besoins qui s'imposent. Les caractéristiques techniques décrites pour un mode de réalisation donné sont applicables à d'autres modes de réalisation de l'invention, sauf si le contraire est indiqué. Dans le mode de réalisation décrit, des diodes électroluminescentes seront considérées à titre exemplaire de sources lumineuses.

La figure 2 montre le schéma d'un circuit électronique implémentant un dispositif de pilotage d'alimentation électrique 200 selon un mode de réalisation de l'invention. Les composants électroniques et le fonctionnement du convertisseur non-illustré ne seront pas explicités en détail dans le cadre de la présente description, puisque des convertisseurs DC/DC sont en soi connus dans l'art. Un circuit de charge 220 comprend N LEDs à alimenter par le convertisseur. Dans le mode de réalisation illustré, le circuit d'interruption 230 comprend un montage comprenant deux branches parallèles qui relient une tension de référence, par exemple 2*VF, à la masse. La première branche comprend une résistance 233 montée en série avec un thermisteur 234 qui implémente les moyens de mesure de la température. La deuxième branche comprend un montage en série de deux résistances 231, 232. De manière préférée, la résistance du thermisteur 238 décroit lorsque la température augmente. Le montage est donc capable de fournir deux niveaux de tension distincts, Vctn et Vref, dont Vctn dépend du comportement du thermisteur et donc de la température ambiante. Le thermisteur est choisi de façon à ce qu'il présente une résistance importante en-dessous de la température seuil décrite plus haut. De préférence, les grandeurs des résistances et le thermisteur sont choisis de façon à ce que les deux niveaux de tension soient sensiblement égaux lorsque la température ambiante est supérieure à la température seuil, et distincts lorsque la température ambiante est inférieure à la valeur de de température seuil.

Le circuit d'interruption 230 comprend en outre un élément comparateur 235 qui sert à comparer les deux niveaux de tension Vctn et Vref. La sortie du comparateur indique un niveau logique « haut » à entrées égales, et « bas » à entrées distinctes. Lorsque la température ambiante est inférieure à la valeur seuil, les deux niveaux de tension comparés sont distincts et le comparateur indique un niveau de sortie haut. La sortie du comparateur 235 est reliée à un transistor 238 à travers un miroir de courant 236. Le niveau haut du comparateur est apte à fermer les moyens d'interruption implémentés par le transistor 238 et induit le court-circuit de la LED. L'utilisation du miroir de courant 236 permet en outre de brancher le circuit 230 sur n'importe quel emplacement de la branche 220, sauf sur les deux dernières LEDs du montage en série. En effet la tension aux bornes de celles-ci sert avantageusement de tension de référence au circuit d'interruption 230.

Lorsque la température augmente au-dessus de la valeur seuil, les tensions Vctn et Vref deviennent sensiblement égales, ce qui descend la sortie du comparateur 235 au niveau bas. Par conséquent les moyens d'interruption 238 sont ouverts et le court-circuit est levé. Une diode Zener 237 est de préférence utilisée afin d'implémenter une protection de tension de grille du transistor, qui est préférentiellement un transistor à effet de champ de type MOSFET. Le circuit décrit pourra être modifié par l'homme du métier de façon à ce que le comparateur 235 soit relié à plusieurs moyens d'interruption 238 qui agissent sur plusieurs LEDs.

## Revendications

1. Dispositif de pilotage d'alimentation électrique (100, 200) de sources lumineuses comprenant :
- un convertisseur DC/DC (110) capable de convertir une tension électrique d'entrée en une tension électrique de sortie;
- un circuit monté en charge du convertisseur (120, 220) comprenant une pluralité de sources lumineuses montées en série;
le dispositif comprenant en outre au moins un circuit d'interruption (130, 230) comprenant des moyens d'interruption (138, 238) destinés à court-circuiter au moins une des sources lumineuses en fonction d'une mesure de la température obtenue par des moyens de mesure de la température ambiante (134, 234), le circuit d'interruption (130, 230) étant apte à court-circuiter au moins une des sources lumineuses lorsque ladite mesure de la température est inférieure à une température seuil ;
**caractérisé en ce que** le circuit d'interruption (230) comprend
- un circuit électrique (231, 232, 233) comprenant un thermisteur (234), le circuit étant apte à fournir deux niveaux de tension électrique, les deux niveaux étant sensiblement égaux lorsque la température ambiante est supérieure à ladite température seuil, et les deux niveaux étant distincts lorsque la température ambiante est inférieure à ladite température seuil ;
- un élément comparateur (235) agencé de façon à comparer les deux niveaux de tension fournis, et à commander l'état d'un élément interrupteur (238) apte à court-circuiter l'au moins une source lumineuse en fonction du résultat de la comparaison ;
et **en ce que** l'élément comparateur (235) est couplé à l'élément interrupteur (238) à travers un miroir de courant (236).

2. Dispositif selon la revendication 1, **caractérisé en ce que** le convertisseur (110) comprend un circuit de type boost, apte à élever la tension, et/ou un circuit de type buck, apte à abaisser la tension.

3. Dispositif selon une des revendications 1 ou 2, **caractérisé en ce que** les sources lumineuses sont des diodes électroluminescentes, LED, caractérisées entre autres par leur chute de tension, ou tension directe, VF.

4. Dispositif selon une quelconque des revendications 1 à 3, **caractérisé en ce que** le circuit d'interruption (130, 230) est apte à court-circuiter au moins une des sources lumineuses uniquement lorsque ladite mesure de la température est inférieure à une température seuil.

5. Dispositif selon les revendications 3 et 4, **caractérisé en ce que** :
- la pluralité de LEDs comprend un nombre N de LEDs,
- le ou les circuits d'interruption (130, 230) sont aptes à court-circuiter un nombre M<N de LEDs, et **en ce que**
- à température ambiante inférieure à ladite température seuil, la chute globale de tension N*VF est supérieure à la tension électrique maximale VMAX que le convertisseur (110, 210) est capable de fournir au circuit de charge (120, 220), tandis que la chute de tension lors d'un court-circuit, (N-M)*VF, est inférieure ou égale à VMAX.

6. Dispositif selon une des revendications 4 ou 5, **caractérisé en ce que** la température seuil est inférieure à -10 °C et préférentiellement inférieure à -15 °C.

7. Dispositif selon une des revendications précédentes, **caractérisé en ce que** le circuit électrique (231, 232, 233, 234) et l'élément comparateur sont alimentés par la tension directe d'au moins l'une des sources lumineuses, VF, et préférentiellement d'au moins deux des sources lumineuses, 2*VF.

8. Dispositif lumineux pour un véhicule automobile comprenant au moins un dispositif de pilotage de l'alimentation électrique de sources lumineuses, assurant notamment une fonction de signalisation lumineuse du véhicule automobile, **caractérisé en ce que** le dispositif de pilotage est conforme à une des revendications 1 à 7.

## Patentansprüche

1. Vorrichtung (100, 200) für die Steuerung der elektrischen Versorgung von Lichtquellen, die Folgendes umfasst:
- einen Gleichspannungs/Gleichspannungs-Umsetzer (110), der eine elektrische Eingangsspannung in eine elektrische Ausgangsspannung umsetzen kann;
- eine als Last des Umsetzers montierte Schaltung (120, 220), die mehrere in Reihe geschaltete Lichtquellen enthält;
wobei die Vorrichtung außerdem wenigstens eine Unterbrechungsschaltung (130, 230) umfasst, die Unterbrechungsmittel (138, 238) enthält, die dazu bestimmt sind, wenigstens eine der Lichtquellen als Funktion einer Messung der Temperatur, die durch Mittel (134, 234) zum Messen der Umgebungstemperatur erhalten wird, kurzzuschließen, wobei die Unterbrechungsschaltung (130, 230) wenigstens eine der Lichtquellen kurzschließen kann, wenn die Messung der Temperatur niedriger als eine Schwellentemperatur ist;
**dadurch gekennzeichnet, dass** die Unterbrechungsschaltung (230) Folgendes umfasst:
- eine elektrische Schaltung (231, 232, 233), die einen Thermistor (234) enthält, wobei die Schaltung zwei Pegel einer elektrischen Spannung bereitstellen kann, wobei die beiden Pegel im Wesentlichen gleich sind, wenn die Umgebungstemperatur höher als die Schwellentemperatur ist, und wobei die beiden Pegel verschieden sind, wenn die Umgebungstemperatur niedriger als die Schwellentemperatur ist;
- ein Komparatorelement (235), das dafür ausgelegt ist, die beiden bereitgestellten Spannungspegel zu vergleichen und den Zustand eines Unterbrecherelements (238), das die wenigstens eine Lichtquelle als Funktion des Ergebnisses des Vergleichs kurzschließen kann, zu steuern;
und dass das Komparatorelement (235) mit dem Unterbrecherelement (238) über einen Stromspiegel (236) gekoppelt ist.

2. Vorrichtung nach Anspruch 1, **dadurch gekennzeichnet, dass** der Umsetzer (110) eine Spannungserhöhungsschaltung, die die Spannung erhöhen kann, und/oder eine Spannungsabsenkungsschaltung, die Spannung absenken kann, umfasst.

3. Vorrichtung nach einem der Ansprüche 1 oder 2, **dadurch gekennzeichnet, dass** die Lichtquellen Leuchtdioden, LED, sind, die unter anderem durch ihren Spannungsabfall oder die Durchlassspannung VF charakterisiert sind.

4. Vorrichtung nach einem der Ansprüche 1 bis 3, **dadurch gekennzeichnet, dass** die Unterbrechungsschaltung (130, 230) wenigstens eine der Lichtquellen ausschließlich dann kurzschließen kann, wenn die Messung der Temperatur niedriger als eine Schwellentemperatur ist.

5. Vorrichtung nach den Ansprüchen 3 und 4, **dadurch gekennzeichnet, dass**:
- die mehreren LED eine Anzahl N von LED umfassen,
- die eine oder die mehreren Unterbrechungsschaltungen (130, 230) eine Anzahl M < N der mehreren LED kurzschließen können und dass
- bei einer Umgebungstemperatur, die niedriger als die Schwellentemperatur ist, der globale Spannungsabfall N x VF höher als die maximale elektrische Spannung VMAX ist, die der Umsetzer (110, 210) an die Lastschaltung (120, 220) liefern kann, während der Spannungsabfall bei einem Kurzschluss (N - M) x VF kleiner oder gleich VMAX ist.

6. Vorrichtung nach einem der Ansprüche 4 oder 5, **dadurch gekennzeichnet, dass** die Schwellentemperatur niedriger als -10 °C und vorzugsweise niedriger als -15 °C ist.

7. Vorrichtung nach einem der vorhergehenden Ansprüche, **dadurch gekennzeichnet, dass** die elektrische Schaltung (231, 232, 233, 234) und das Komparatorelement mit der Durchlassspannung VF wenigstens einer der Lichtquellen, und vorzugsweise mit der Durchlassspannung wenigstens zweier Lichtquellen, 2 x VF, versorgt werden.

8. Leuchtvorrichtung für ein Kraftfahrzeug, die wenigstens eine Vorrichtung für die Steuerung der elektrischen Versorgung von Lichtquellen umfasst, die insbesondere eine Lichtsignalgebungsfunktion des Kraftfahrzeugs sicherstellt, **dadurch gekennzeichnet, dass** die Steuervorrichtung wie in einem der Ansprüche 1 bis 7 beschaffen ist.

## Claims

1. Device (100, 200) for controlling the supply of power to light sources, comprising:
- a DC/DC converter (110) capable of converting an input electrical voltage into an output electrical voltage;
- a circuit mounted to load the converter (120, 220) comprising a plurality of light sources mounted in series;
the device furthermore comprising at least one switching circuit (130, 230) comprising switching means (138, 238) intended to short-circuit at least one of the light sources depending on a temperature measurement obtained by means (134, 234) for measuring ambient temperature, the switching circuit (130, 230) being able to short-circuit at least one of the light sources when said temperature measurement is below a temperature threshold;
**characterized in that** the switching circuit (230) comprises:
- an electrical circuit (231, 232, 233) comprising a thermistor (234), the circuit being able to deliver two electrical voltage levels, the two levels being substantially equal when the ambient temperature is above said temperature threshold, and the two levels being different when the ambient temperature is below said temperature threshold;
- a comparator element (235) arranged so as to compare the two voltage levels delivered, and to control the state of a switching element (238) able to short-circuit at least one light source depending on the result of the comparison;
and **in that** the comparator element (235) is coupled to the switching element (238) by way of a current mirror (236).

2. Device according to Claim 1, **characterized in that** the converter (110) comprises a boost type circuit, able to increase the voltage, and/or a buck type circuit, able to decrease the voltage.

3. Device according to either of Claims 1 and 2, **characterized in that** the light sources are light-emitting diodes (LEDs), characterized, *inter-alia,* by their voltage drop, or forward voltage, VF.

4. Device according to any of Claims 1 to 3, **characterized in that** the switching circuit (130, 230) is able to short-circuit at least one of the light sources only when said temperature measurement is below a temperature threshold

5. Device according to Claims 3 and 4, **characterized in that**:
- the plurality of LEDs comprises a number N of LEDs; and
- the one or more switching circuits (130, 230) are able to short-circuit a number M<N of LEDs; and **in that**
- at an ambient temperature below said temperature threshold, the overall voltage drop N*VF is larger than the maximum electrical voltage VMAX that the converter (110, 210) is capable of delivering to the load circuit (120, 220), whereas the voltage drop during a short-circuit (N-M)*VF, is smaller than or equal to VMAX.

6. Device according to either of Claims 4 and 5, **characterized in that** the temperature threshold is below -10°C and preferably below -15°C.

7. Device according to one of the preceding claims, **characterized in that** the electrical circuit (231, 232, 233, 234) and the comparator element are supplied with the forward voltage of at least one of the light sources, VF, and preferably of at least two of the light sources, 2*VF.

8. Luminous device for an automotive vehicle comprising at least one device for controlling the supply of power to light sources, especially providing a luminous signalling function of the automotive vehicle, **characterized in that** the control device is in accordance with one of Claims 1 to 7.
